(19) Europäisches Patentamt
European Patent Office
Office européen des brevets

(11) **EP 3 048 559 A1**

(12) **EUROPEAN PATENT APPLICATION**

(43) Date of publication:
**27.07.2016   Bulletin 2016/30**

(51) Int Cl.:
***G06K 9/00*** (2006.01)      ***B61L 23/00*** (2006.01)
***B61L 23/04*** (2006.01)

(21) Application number: **15151999.8**

(22) Date of filing: **21.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **RindInvest AB**
**725 92 Västeras (SE)**

(72) Inventors:
• **Ahlberg, Jörgen**
**583 34 Linköping (SE)**

• **Berg, Amanda**
**582 74 Linköping (SE)**
• **Öfjäll, Kristoffer**
**590 75 Ljungsbro (SE)**
• **Felsberg, Michael**
**583 33 Linköping (SE)**
• **Olsson, Rolf**
**725 92 Västerås (SE)**
• **Edgert, Stefan**
**184 39 Åkersberga (SE)**

(74) Representative: **Awapatent AB**
**Junkersgatan 1**
**582 35 Linköping (SE)**

(54) **Method and system for detecting a rail track**

(57)    A method of detecting a rail track (1) in front of a track-bound vehicle (2), the method comprising the steps of: providing (20) a thermal camera (3) facing substantially forward in the direction of travel of the vehicle (2), acquiring (40) at least one thermal image (5) of a scene (4) in front of the vehicle (2) by means of the thermal camera (3), providing (50) at least one scene geometry based on information concerning the thermal camera (3) and information concerning the rail track (1), the scene geometry comprising at least one possible position and extent of the rail track (1), and matching (60) the thermal image (5) with the scene geometry to determine where in the thermal image (5) the rail track (1) is positioned.

In embodiments of the method obstacles (11) in a rail track area and potential obstacles (12) moving towards the detected rail track (1) may be detected.

Disclosed is also a method of detecting an anomaly on or near an area which moves along a movement direction relative to a camera

Fig 1

EP 3 048 559 A1

**Description**

Technical Field

The present disclosure relates to a method and system of detecting a rail track in front of a track-bound vehicle and in embodiments of the method obstacles in a rail track area and potential obstacles moving towards the detected rail track may be detected. The disclosure is also related to a method of detecting an anomaly on or near an area which moves along a movement direction relative to a camera.

Technical Background

Every year there is a large number of collisions between trains and undesirable objects located on or close to the rail tracks. Such undesirable objects are for example animals (moose, deer, venison etc.), humans, vehicles, trees etc. Collisions with such undesirable objects affect safety of the train passengers, most likely kills the animal or human being located on or near the rail track, cause delays in the train traffic, and also results in costs for repairing the train after the collision.

A train driving with normal speed normally has a stopping distance of at least one kilometer and, hence, it is often far too late to brake the train when the engine-driver detects an undesirable object in front of the train. Under impaired visibility such as bad weather conditions (rain, fog, or snow fall), or when driving in dusk/dawn or in the dark, the chances that the engine-driver detects an undesirable object in front of the train on or close to the rail tracks and manages to break the train before a collision is a fact are non-existent.

Hence, there is a desire to be able to avoid or prevent train collisions.

US2014/0218482 A1 discloses a system using widely separated and coordinated cameras mounted at the front of the train for recognizing obstructions and calculating distance to the obstructions to a degree which enables the train to react quickly and break early enough to avoid accidents. The system is autonomous, using software which allows the train to know its precise location, its speed and direction based on instant recognition of track features, independently of external signals such as GPS. The system may also work in the infra-red, allowing compensation for fog and rain.

Summary of the Invention

It is an object of the present disclosure to provide a method and system which are capable of detecting a rail track in front of a track-bound vehicle. In embodiments of the method obstacles in a rail track area and potential obstacles moving towards the detected rail track may be detected. Also provided is a method of detecting an anomaly on or near an area which moves along a movement direction relative to a camera.

The invention is defined by the appended independent claims. Embodiments are set forth in the dependent claims, in the attached drawings and in the following description.

According to a first aspect there is provided a method of detecting a rail track in front of a track-bound vehicle, the method comprising the steps of: providing a thermal camera facing substantially forward in the direction of travel of the vehicle, acquiring at least one thermal image of a scene in front of the vehicle by means of the thermal camera. The method further comprising providing at least one scene geometry based on information concerning the thermal camera and information concerning the rail track, the scene geometry comprising at least one possible position and extent of the rail track, and matching the thermal image with the scene geometry to determine where in the thermal image the rail track is positioned.

With "rail track" is here meant a track comprising two parallel rails or alternatively a monorail, i.e. a rail in which the track comprises a single rail.

With "track-bound vehicle" is here meant a train, a tram, an underground train or a rail bus.

With substantially forward is here meant forward +/- 15 degrees horizontally or vertically, preferably +/- 10 degrees or +/- 5 degrees.

With "scene" is here at least meant a rail track zone and a zone adjacent to the rail track zone in front of the track-bound vehicle in a direction of travel of the vehicle.

A "thermal image" is understood as a digital image showing differences in temperature in the scene in front of the track-bound vehicle, with each color or grey scale level corresponding to a specific temperature.

With "at least one thermal image" is meant one thermal image or a plurality of successive thermal images, where the successive images may be immediately successive images acquired at different points in time.

With "scene geometry" is meant the mapping from pixel coordinates to world coordinates, that is, the three-dimensional world coordinates (relative the camera) of the footprint of each pixel below the horizon. Thus, the scene geometry implicitly provides information about the distance from the camera to each pixel in the image, the scale at each pixel, and the expected rail track separation distance (measured in pixels) at each image position.

The computed scene geometry may give information about how many pixels the rail track is expected to constitute in each row of pixels in the thermal image, and may also provide a homography from the thermal image to a perspective free map from above.

A provided scene geometry may be reused for successive thermal images.

With this method it is possible to identify the location and direction of the rail track in the thermal image corresponding to the scene in front of the track-bound vehicle. Having identified the rail track in the thermal image it is possible to detect potential obstacles on or close to the rail track as described in embodiments below.

Providing the scene geometry may comprise computing a plurality of possible positions and extents of the rail track, and wherein the matching comprises determining which one of the pluralities of possible positions and extents provides the best match with the thermal image.

The information concerning the thermal camera may comprise at least one of camera field of view, camera position, camera angle, lens distortion and camera resolution.

The information concerning the rail track may comprise at least one of rail track width and rail track separation.

The rail track separation, or track gauge, in the case of two parallel rails, is standardized for each country, and is the spacing of the rails of a rail track and is measured between the inner faces of the load-bearing rails. The track width is the width of the rail itself.

The method may further comprise determining a distance from the vehicle to an area represented in the thermal image by obtaining distance data for the corresponding area from the scene geometry.

The step of matching the thermal image with the scene geometry may comprise the steps of: providing, based on the thermal image and the scene geometry, at least two possible rail track locations in the thermal image, evaluating each possible rail track location by extracting image feature values along the possible rail track, giving each possible rail track location a score based on the image feature values, and selecting the possible rail track location with the highest score as the location of the rail track in the thermal image.

With "possible rail track location" is meant a hypothesis about the position and extension of the rail track in the thermal image, given a certain camera position, that is the set of pixels partly or fully occupied by a rail track. This set may be indicated by a mask image, where the set of pixels is a certain value, or a parameterized curve.

With "image feature value" is meant a value computed from a local neighborhood in the thermal image, such as local gradient, presence of edges, or output from a filter.

The method may further comprise a step of indicating a rail track area in the thermal image, in which rail track area the rail track is located.

This may be done by creating a mask image, that is, a binary image with the pixels outside the indicated area set to zero and the pixels inside the indicated area set to one. Alternatively, this may be done by giving the corners of a polygon or any other method for indicating an area in an image.

With "rail track area" is meant an area in the immediate vicinity of the rail track, such as between the rail tracks and e.g. within a distance from the rail track that is normally occupied by the vehicle, or within a distance which corresponds to an obstacle free width (a term which is typically defined by regulation or ordinance).

The method above may further comprise a step of refinement, the step comprising: identifying a pair of continuous parallel features associated with the rail track in the indicated rail track area in the thermal image, remapping at least a part of the thermal image containing the identified rail track, such that both of the parallel features extend in parallel with an image axis, filtering pixel rows or groups of pixel rows of the remapped rail track area with a filter in which a horizontal position with a largest filter response indicates a horizontal position of the rail(s) in each pixel row or groups of pixel rows, adjusting the rail track area, repeating the steps of remapping, filtering and adjusting the rail track area a pre-set number of times or until convergence is reached, and providing a final remapped thermal image with a final rail track area.

With "remapping at least a part of the thermal image containing the identified rail track" is meant that the entire thermal image is remapped, part of the thermal image including at least a portion of the rail track area is remapped, only the rail track area is remapped or a portion of the rail track area is remapped.

This refinement step may be necessary as due to model errors (such as the world not being entirely flat or the thermal camera housing shifting its angle slightly), image noise (due to thermal noise in the thermal camera or bad weather conditions), and clutter (such as vegetation partly occluding the rails), the rail track detection might not always be precise enough.

The rail track area may be adjusted by adapting the horizontal position of the rail track area for that particular pixel row, limited to a maximum number (such as 2) of pixels.

With a "pre-set number of times" is here meant e.g. at least 2, at least 4, at least 6, at least 8 or at least 10 times.

With "until convergence is reached" is here meant that the steps are repeated until the rail track area does not change anymore, or the change is insignificant, e.g. that the final rail track area and the rail track area differ with less than 100 pixels.

This method may further comprise a step of updating the filter to a tuned filter, which is tuned to the rails in the final remapped thermal image.

The filter may be updated by creating a new filter tuned to the final remapped image, and then creating a weighted average of the new and old filter.

Creating a tuned filter may be done using a known method. One such known method is the MOSSE filter described in D. S. Bolme, J. R. Beveridge, B. A. Draper, "Visual object tracking using adaptive correlation filters", Proceedings of the IEEE Conference on Computer Vision and Pattern Recognition, June 2010, pp. 2544-2550.

Thus, the filter keeps updated when the environment, such as weather conditions, changes.

The method may further comprise a step of detecting an obstacle in the rail track area of the final remapped thermal image. The method comprises filtering pixel rows or groups of pixel rows indicated by the final rail track area in the final remapped thermal image with the tuned filter, which pixel rows extend along the rail track area and depict respective parts in the rail track area, wherein if a pixel row or groups of pixel rows give filter responses which meet a predetermined criterion, these rows are identified as comprising an obstacle in the final rail track area of the final remapped thermal image.

With "predetermined criterion" is meant a threshold value, wherein the filter response exceeds or fall below the threshold value.

With obstacle is here meant not "rail track like", such as an obstacle on the detected rail track.

The higher the sensibility of the threshold value, the higher is the number of false obstacles detected. The lower the sensibility of the threshold, the lower is the amount of real obstacles which are detected.

The method may further comprise a step of updating the filter and excluding rows of filtered pixels identified with an obstacle.

As the filter is used for locating a rail track in an image, pixel rows with a detected obstacle may be excluded from the filtering when updating the filter in order to optimize the filter for rail track detection.

The method may further comprise a segmentation operation, wherein a thermal image is divided into a first area comprising the rail track area and a close area, which close area is adjacent to the rail track area, and a second area, which is spaced from the rail track area.

The first area may comprise the rail track area (defined above), and a close area which is the area outside the rail track area within which objects may move into the rail track area. The second area, adjacent to the first area, may be an area in which objects cannot, or are unlikely to, move into the rail track area.

The method may further comprise a step of detecting potential obstacles moving towards the detected rail tracks using the thermal image and the close area.

The detection of potential obstacles moving towards the detected rail tracks may comprise identifying areas within the close area which are within a predetermined temperature range and/or have a predetermined shape as a potential obstacle.

This may be done by thresholding of the thermal image.

Known methods for foreground-background segmentation, such as the method by Stauffer and Grimson (C. Stauffer and W. E. L. Grimson, "Adaptive background mixture models for real-time tracking", IEEE International Conference on Computer Vision and Pattern Recognition, Fort Collins, CO, June 1999), or methods for detection of motion / optical flow (B. K. Horn and B. G. Schunk, "Determining Optical Flow", Proceedings of SPIE, Vol. 0281, 1981) or combinations thereof may be used for detecting potential obstacles moving towards the detected rail tracks.

The method may comprise a step of tracking a detected obstacle on the detected rail tracks or a detected potential obstacle over a plurality of successive thermal images.

A tracking method which may be used for such tracking is discussed for example in S. Blackman and R. Popoli, Design and Analysis of Modern Tracking Systems, Artech House, Norwood MA, 1999.

With this tracking it is possible to manage association between currently and previously detected obstacles and potential obstacles.

The method may further comprise determining whether each detected obstacle or detected potential obstacle meets a predetermined set of alarm criteria, and indicating those obstacles or potential obstacles meeting the alarm criteria to a user.

The alarm criteria may be based on the object's properties, such as size, temperature, velocity or distance from the rail track.

According to a second aspect there is provided a system for detecting a rail track in front of a track-bound vehicle, the system comprising: a thermal camera arranged facing substantially forward in a direction of travel of the vehicle and arranged to provide thermal image(s) of a scene in front of the vehicle, and a processing device arranged to: provide at least one scene geometry based on information concerning the thermal camera and information concerning the rail track, the scene geometry comprising at least one possible position and extent of the rail track, and match a thermal image with the scene geometry to determine where in the thermal image the rail track is positioned.

There is provided a method of detecting an anomaly on or near an area which moves along a movement direction relative to a camera, the area having a constant or recurring shape as seen from the camera along the movement direction, the method comprising: acquiring an image depicting the area, identifying a part of the image which is occupied by the area, and identifying the movement direction, extracting pixel rows or groups of pixel rows, which extend perpendicular to the movement direction, which are positioned at different locations along the movement direction, and which depict respective parts of the area, and comparing one of the pixel rows or groups of pixel rows with at least one other of the pixel rows of groups of pixel rows and identifying an anomaly when a difference between such compared pixel rows or groups of pixel rows meet a predetermined criterion.

That the area moves relative the camera is here meant that the camera is not moving while the area is moving, that the area is not moving while the camera is moving or that both the area and the camera are moving in the same direction or in opposite directions.

The camera may be an ultraviolet, visual, infrared or multispectral camera and the image may for example be a thermal image or a visual image.

The camera may for example be mounted on a vehicle such as a car or a track-bound vehicle such as a train, a tram, an underground train or a rail bus. The area is then a road or a rail track area.

The camera may be mounted on a wall or similar, preferably by means of an arm, a rack or similar arrangement, and the moving area is then for example a conveyor.

An area which has a recurring shape along the movement direction is for example a road with non-continuous road-markings or a conveyor with undulated edge.

With "anomaly" is here meant not "area like", such as an obstacle (animal, human, vehicle etc) on or near the rail track, the road or the conveyor.

The movement direction may be predetermined relative to the camera, e.g. the camera moves along a path constituting the area.

Identifying the movement direction may be done by comparing the position of the area in consecutive images or by using a tracking method tracking anomalies in successive images for example as discussed in S. Blackman and R. Popoli, Design and Analysis of Modern Tracking Systems, Artech House, Norwood MA, 1999.

With "meeting a predetermined criterion" is for example meant that the difference between compared pixel rows or groups of pixel rows exceeds or falls below a predetermined value.

By "extracting pixel rows or groups of pixel rows" is here meant that pixel rows are picked from the image. With pixel row is here meant an entire pixel row or a selection of columns of the pixel row.

Identifying the part of the image which is occupied by the area may comprise providing at least one scene geometry based on information concerning the camera and/or based on information concerning the area, the scene geometry comprising at least one possible position and extent of the area, matching the image with the scene geometry to determine where in the image the area is positioned.

The step of matching the image with the scene geometry may comprise the steps of providing, based on the scene geometry, at least two possible locations of the area in the image, evaluating each of the possible area locations by extracting image feature values along the possible area giving each possible area location a score based on the image feature values, and selecting the possible area location with the highest score as the location of the area in the image.

With "image feature value" is meant a value computed from a local neighborhood in the thermal image, such as local gradient, presence of edges, or output from a filter.

The method may further comprise a step of remapping at least the part of the image identified to be occupied by the area in such a way that the movement direction of the area follows one of the axes of the remapped image.

The remapping step may further comprise a refinement step comprising comparing pixel rows or groups of pixel rows in the image with the remapped image for finding an optimal position of each pixel row or group of pixel rows as seen in a direction orthogonal to the movement direction of the area.

The identified anomaly may be projected back to the image using the scene geometry, whereby the anomaly is indicated in its correct position in the image.

Brief Description of the Drawings

Fig. 1 is a schematic view of a non-to-scale system for detecting a rail track in front of a track-bound vehicle.
Fig. 2 shows a schematic view of a method of detecting a rail track in front of a track-bound vehicle.
Fig. 3a and 3b show two possible rail track locations in a thermal image, which are used for matching a thermal image with a scene geometry.
Fig. 4 shows a thermal image in which dashed lines indicate the borders of a rail track area and a close area
Fig. 5a and 5b show a detected rail track before and after remapping of the detected rail track in a thermal image, respectively.

Fig. 6 shows a thermal image with an obstacle detected on the rail track.

Fig. 7 shows a thermal image with a potential obstacle moving towards the detected rail track.

Fig. 8 shows a schematic view of a method of detecting an anomaly in an image.

Fig. 9 shows geometry of a railway car on a railway with constant curvature 1/R.

Fig. 10 shows geometry of a constant curvature rail.

Fig. 11 a and 11 b show images illustrating the mapping from pixel positions to the corresponding curvature histogram bin indexes, for left and right rail respectively.

Fig. 12a and 12b show expected rail direction in an image, left and right rail respectively.

Fig. 13a shows a camera image with areas mapping to the peak histogram bin overlaid.

Fig. 13b shows a curvature histogram generated from the image in Fig. 13a using orientation dependent weighting of edge magnitudes.

Fig. 13c shows a magnitude histogram generated from the image in Fig. 13a without orientation weighting.

Fig. 14a and 14b show an original image with rail mask overlay and an image with masked and rescaled image rows respectively.

Fig. 15a-d show examples of a rail mask correction. Fig. 15a shows an initial mask, Fig. 15b initial responses, Fig. 15c a corrected mask and Fig. 15d corrected responses.

Fig. 16a and 16b show example frames from a test sequence with simulated objects present.

Fig. 17 shows ROC-curves of true positive (y-axis) and false positive (x-axis) rates for three different values of $\Delta T$.

## Detailed Description

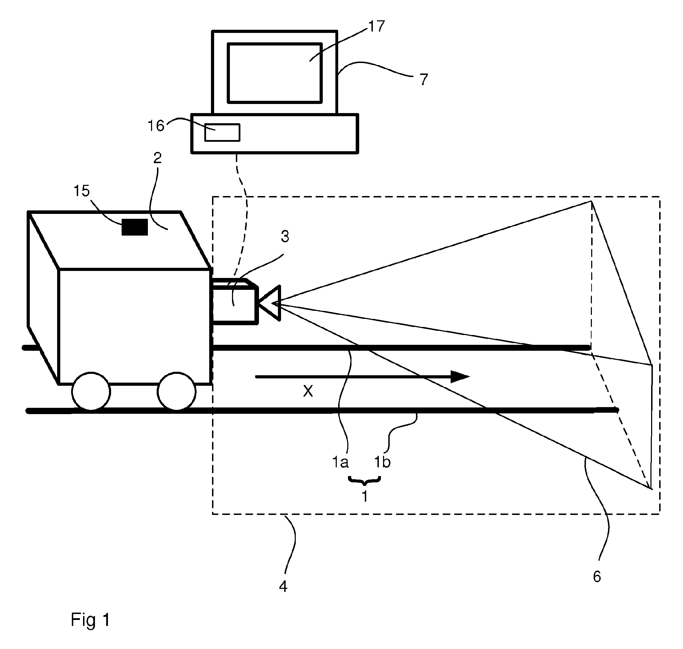

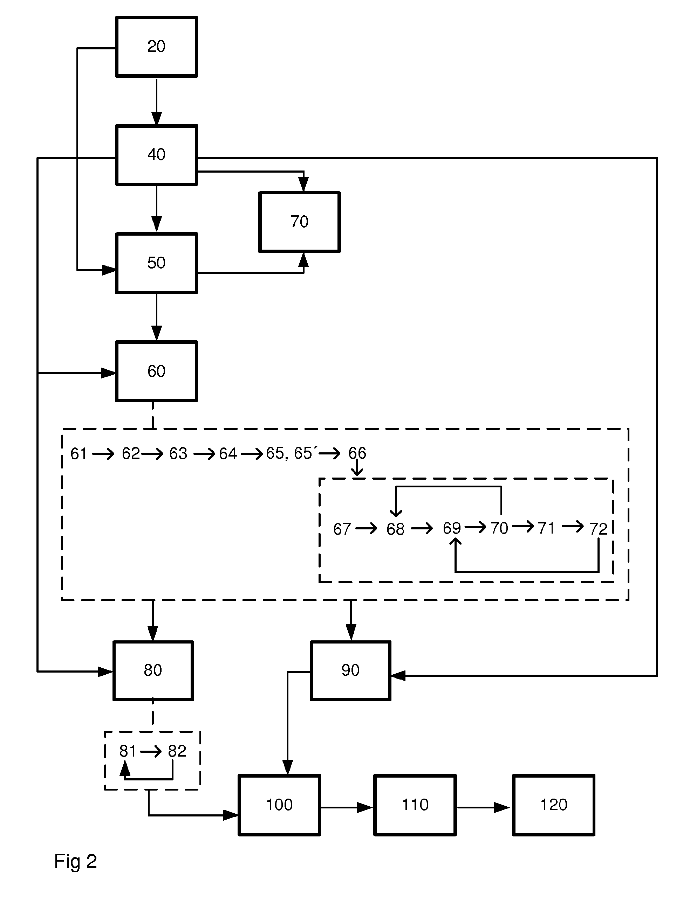

A system for detecting a rail track 1 in front of a track-bound vehicle 2 is shown in Fig. 1 and a method for rail track 1 detection is schematically illustrated in Fig. 2.

The rail track 1 is in Fig. 1 a track comprising two parallel rails 1 a, 1 b. Alternatively, a monorail, i.e. a rail in which the track comprises a single rail (not shown), may be detected. The track-bound vehicle 2 may be a train, a tram, an underground train or a rail bus.

The system comprises a thermal camera 3, which is arranged 20 facing substantially forward in a direction of travel X of the vehicle 2. The thermal camera 3 may for example be mounted at the front of the vehicle 2, as shown in Fig. 1.

The thermal camera 3 is arranged to provide 40 a thermal image 5 or a plurality of successive thermal images 5 acquired at different points in time of a scene 4 in front of the vehicle 2. For example, during operation, the thermal camera 3 may provide a continuous stream of thermal images. A frame rate of such a stream may be on the order of 1-100 frames per second, preferably about 10 frames per second.

The scene 4 comprises the rail track zone, i.e. the zone limited by and including the rail tracks, and a zone adjacent to the rail track zone in front of the track-bound vehicle 2 in a direction of travel X of the vehicle 2. The rail track zone may extend along the rail track and substantially perpendicularly to the rail track. An extent in the perpendicular direction may be a predetermined fixed value, or a value which is selected or calculated based on a current speed of the rail-bound vehicle 2.

The thermal camera 3 may be arranged 20 in such a way that it provides a horizontal field of view of typically 15° to 25° and a vertical field of view of typically 15° to 25°, such that a at least the rail track zone and the zone adjacent to the rail track zone of the scene 4 in front of the track-bound vehicle 2 is within the field of view 6. There may be a fixed focus of from 1 m in front of the thermal camera 3 up to several kilometers in front of the track-bound vehicle 2.

The system further comprises a processing device 7, which is arranged to provide 50 at least one scene geometry based on at least information concerning the thermal camera 3 and information concerning the rail track 1, i.e. pixel coordinates are mapped to world coordinates, that is, the three-dimensional world coordinates (relative the camera) of the footprint of each pixel below the horizon. Thus, the scene geometry implicitly provides information about the distance from the camera to each pixel in the image, the scale at each pixel, and the expected rail track separation distance (measured in pixels) at each image position.

The scene geometry may also provide a homography from the thermal image to a perspective free map from above.

The scene geometry comprises at least one possible position and extent of the rail track.

For providing the scene geometry 50 a plurality of possible positions and extents of the rail track 1 may be calculated.

The information concerning the thermal camera 3, i.e. geometrical data, may comprise at least one of camera field of view 6, camera position and camera angle in relation to the rail track 1, camera resolution and camera lens distortion.

The information concerning the rail track 1 may comprise at least one of rail track width and rail track separation. The rail track separation, or track gauge, in the case of two parallel rails 1 a, 1 b, is standardized for each country, and is the spacing of the rails 1 a, 1 b of a rail track 1 and is measured between the inner faces of the load-bearing rails 1 a, 1 b. The track width, in the case of a monorail, is the width of the rail 1 a, 1 b itself. Information concerning the rail track 1 could also comprise maximum railway curvature, railway leaning angle and vehicle 2 leaning angle.

A calculated scene geometry may be reused for successive thermal images 5. For example, the scene geometry may be calculated once for a given camera installation and then reused for all calculations.

The scene geometry may be modified based on information on the vehicle's current position.

The computed scene geometry may give information about how many pixels the rail track 1 is expected to constitute in each row of pixels in the thermal image, and may also provide a homography from the thermal image 5 to a perspective free map from above.

The processing device 7 of the system may further be arranged to match a thermal image 5 (e.g. each thermal image) with the scene geometry to determine 60 which one of the plurality of possible positions and extents of the rail track 1 provides the best match with the thermal image 5 and to determine where in the thermal image 5 the rail track 1 is positioned.

Hence, it is possible to identify the position and direction of the rail track 1 in the thermal image 5 corresponding to the scene 4 in front of the track-bound vehicle 2.

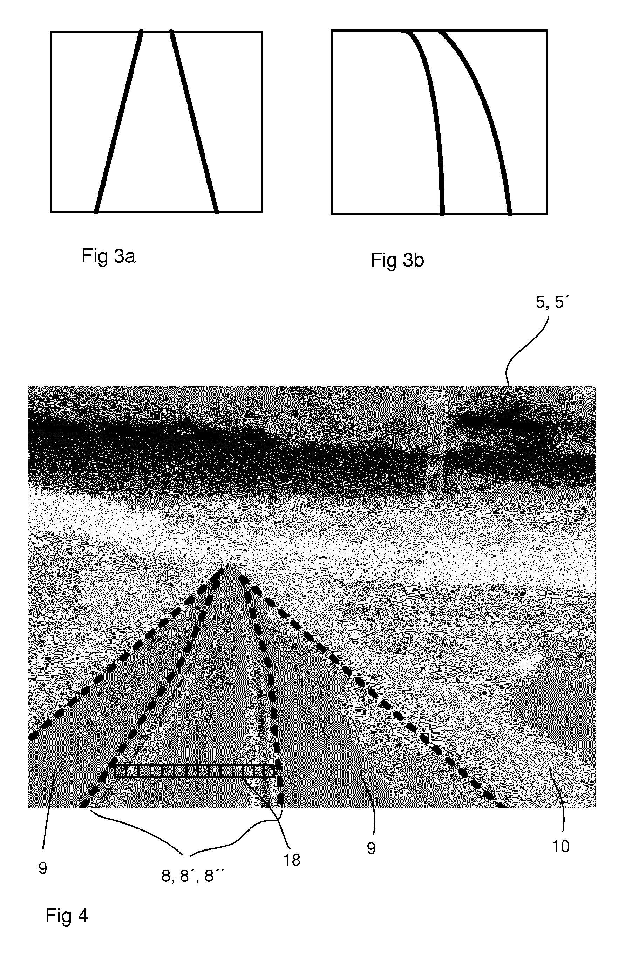

The matching 60 of a thermal image 5 with the scene geometry may comprise the steps of: providing 61, based on the thermal image 5 and the scene geometry, at least two possible rail track 1 locations, see Fig. 3a and 3b, in the thermal image 5, evaluating 62 each possible rail track 1 location by extracting image feature values along the possible rail track 1, giving each possible rail track 1 (from the scene geometry) location a score 63 based on the image feature values, and selecting 64 the possible rail track 1 location with the highest score as the location of the rail track 1 in the thermal image 5.

With "possible rail track 1 location" is meant a hypothesis about the position and extension of the rail track 1 in the thermal image 5, given a certain camera position, which is the set of pixels partly or fully occupied by a rail track 1. This set may be indicated by a mask image, where the set of pixels is a certain value, or a parameterized curve.

With "image feature value" is meant a value computed from a local neighborhood in the image, such as local gradient, presence of edges, or output from a filter.

In one embodiment the image 5 may be filtered in order to extract image gradients. In each pixel, the direction and the magnitude of the image gradient is computed. Along each candidate rail, the magnitude of the gradient in each pixel along the rails is weighted so that gradients perpendicular to the rail candidate are given the highest weight and gradients parallel to the rail candidate are given the lowest weight. The sum of the weighted gradient magnitudes along a rail candidate may constitute its score.

A distance from the vehicle 2 to an area represented in the thermal 5 image may be determined by obtaining distance data for the corresponding area from the scene geometry.

Such distance data may include information about where in the thermal image 5 the horizon is located and how far away each pixel (below the horizontal line) in the thermal image 5 is from the thermal camera 3.

The method may further comprise a step of indicating 65 a rail track area 8 in the thermal image 5. The rail track area 8 indicates in which part of the thermal image 5 the rail track 1 is located. In Fig. 4 the image segment between the two segments 9 marked with dotted lines is the rail track area 8 within which the rail track 1 is located.

This may be done by creating a mask image, that is, a binary image with the pixels outside the indicated area set to zero and the pixels inside the indicated area set to one. Alternatively, this may be done by giving the corners of a polygon or any other method for indicating an area in an image. With rail track area 8 is meant an area in the immediate vicinity of the rail track 1, such as between the rail tracks 1 and e.g. within a distance from the rail track 1 that is normally occupied by the vehicle 2, or within a distance which corresponds to an obstacle free width (a term which is typically defined by regulation or ordinance).

In one embodiment when a possible rail track 1 position has been determined the rail 1 a, 1 b may be traced further into the image 5, following edges in the image 5 with orientation close to the expected orientation. The rail traces may be projected onto the ground plane using a homography or any other projection method. A spline curvature rail model may be used and adjusted to fit the rail traces, either in the projected or the original coordinate system, whereafter the rail model may be reprojected, if necessary, into the image plane, and the rail track area 8 may be indicated in the thermal image 5, indicating in which part of the thermal image 5 the railway is.

When indicating 65 a rail track area 8 in the thermal image 5 a segmentation operation 65' may be used, wherein a thermal image 5 is divided into a first area 8, 9 comprising the rail track area 8, 8', 8" and a close area 9, which close area 9 is adjacent to the rail track area 8, 8', 8", and a second area 10, which is spaced from the rail track area 8, 8', 8", Fig. 4.

The first area 8, 9 may be divided into a rail track area 8 (as defined above) and a close area 9 which is the area outside the rail track area 8 within which objects may move into the rail track area 8. For example, the close area 9 may extend from the outer lateral border of the rail track area, by a distance of 2-20 meters, depending, e.g. on the vehicle's speed. The second area 10 may be an area in which objects cannot, or are unlikely to, move into the rail track area 8. The second area may extend from the outer lateral border of the close area 9.

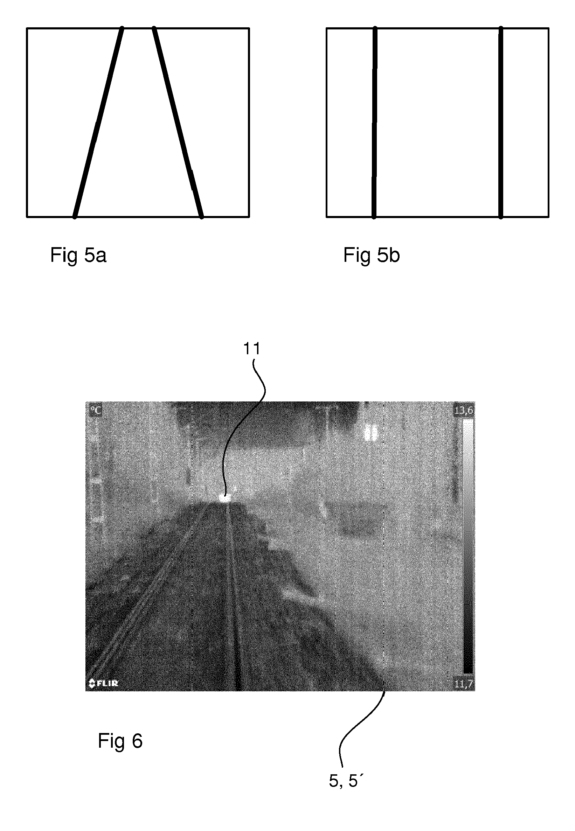

The step of indicating a rail track area 65, 65' may further comprise a step of refinement 66. The refinement step 66 may comprise identifying 67 a pair of continuous parallel features associated with the rail track 1 in the rail track area 8 in the thermal image 5 and remapping 68 at least a part of the thermal image 5 containing the identified rail track 1, such that both of the parallel features extend in parallel with an image axis, see Fig. 5a and 5b. (Fig. 5a shows the identified track before remapping and Fig. 5b after remapping). The refinement step 66 further comprises filtering 69 pixel rows or groups of pixel rows of the remapped thermal image 5' with a filter in which a horizontal position with a largest filter response indicates a horizontal position of the rail(s) 1 a, 1 b in each pixel row or groups of pixel rows, adjusting 70 the rail track area 8', repeating the steps of remapping 68, filtering 69 and adjusting 70 the rail track area a pre-set number of times or until convergence is reached, and providing 71 a final remapped thermal image 5" with a final rail track area 8".

This refinement step 66 may be advantageous as due to model errors (such as the world not being entirely flat or the thermal camera 3 housing shifting its angle slightly), image noise (due to thermal noise in the thermal camera or bad weather conditions), and clutter (such as vegetation partly occluding the rails), the rail track detection might not always be precise enough.

This method may further comprise a step of updating 72 the filter to be tuned to the rails 1 a, 1 b in the final remapped rail track area 8".

The filter may be updated by creating a new filter tuned to the final remapped image 5", and then creating a weighted average of the new and old filter.

Creating a tuned filter may be done using a known method. One such known method is the MOSSE filter described in D. S. Bolme, J. R. Beveridge, B. A. Draper, "Visual object tracking using adaptive correlation filters", Proceedings of the IEEE Conference on Computer Vision and Pattern Recognition, June 2010, pp. 2544-2550.

Thus, the filter keeps updated when the environment, such as weather conditions, changes.

The method may further comprise a step of detecting 80 an obstacle 11 in the rail track area 8" of the final remapped thermal image 5", Fig. 6. An obstacle 11 may be anything that is not "rail track like", and is for example animals (moose, deer, venison etc.), humans, vehicles, trees etc.

An obstacle 11 could also be a frozen railway switch in front of the vehicle 2.

The detection 80 of an obstacle 11 comprises filtering 81 pixel rows 18 or groups of pixel rows of the final rail track area 8" in the final remapped thermal image 5" with the tuned filter (from the refinement step 66), wherein if a number of filtered pixel row or groups of pixel rows give filter responses which meet at predetermined criterion, these rows are identified as comprising an obstacle 11 in the final rail track area 8" of the final remapped thermal image 5".

The predetermined criterion may be a threshold value, wherein the filter response exceeds or fall below the threshold value

The higher the sensibility of the threshold value, the higher the amount of false obstacles 11 is detected. The lower the sensibility of the threshold, the lower is the amount of real obstacles 11 which are detected.

The filter gives a value (filter response) for every horizontal position of a pixel row 18 or groups of pixel rows.

The method may further comprise a step of updating 82 the filter excluding filtered pixel rows identified with an obstacle 11.

The method may further comprise a step of detecting 90 potential obstacles 12 moving towards the detected rail tracks 1 using the thermal image 5 and the close area 9.

The detection 90 of potential obstacles 12 moving towards the detected rail tracks 1 may comprise identifying areas within the close area 9 which are within a predetermined temperature range and/or have a predetermined shape as a potential obstacle 12.

This may be done by thresholding of the thermal image.

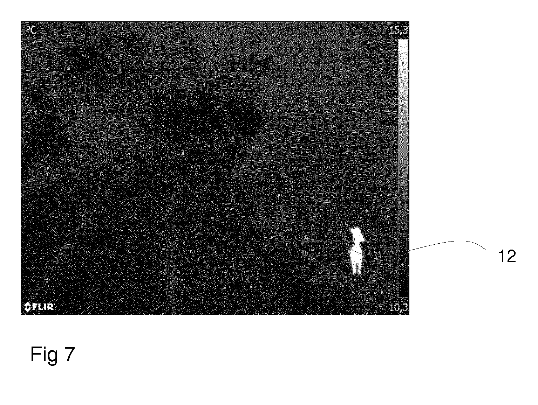

Known methods for foreground-background segmentation, such as the method by Stauffer and Grimson (C. Stauffer and W. E. L. Grimson, "Adaptive background mixture models for real-time tracking", IEEE International Conference on Computer Vision and Pattern Recognition, Fort Collins, CO, June 1999), or methods for detection of motion / optical flow (B. K. Horn and B. G. Schunk, "Determining Optical Flow", Proceedings of SPIE, Vol. 0281, 1981) or combinations thereof may be used for detecting 90 potential obstacles 12 moving towards the detected rail tracks 1. Potential obstacles 12 moving towards the identified rail track 1 may be the same kind of obstacles as mentioned above when discussing identification of obstacles 11 on the rail track 1. In Fig. 7 a potential obstacle 12 in the form of a deer is seen.

An obstacle 11 or potential obstacle 12 may be identified based on its properties, such as size, temperature, position, movement vector etc.

A detected potential obstacle 12 moving towards the track rail 1 or an obstacle 11 detected on the track rail 1 may be tracked 100 over a plurality of successive thermal images 5, 5".

Tracking of objects in successive images is per se known and is for example discussed in S. Blackman and R. Popoli, Design and Analysis of Modern Tracking Systems, Artech House, Norwood MA, 1999.

Through the tracking 100 it is possible to manage association between currently and previously detected obstacles 11 and potential obstacles 12. The output of this step is information about tracked objects 11, 12 such as size, distance of object from the thermal camera, velocity, temperature etc.

The method may further comprise a step of determining 110 whether each detected obstacle 11 or detected potential obstacle 12 meets a predetermined set of alarm criteria, and indicating 120 those obstacles 11 or potential obstacles 12 meeting the alarm criteria to a user.

The alarm criteria may be based on the object's properties, such as size, temperature, velocity, and distance from the rail track.

When obstacles 11 or potential obstacles 12 meeting the alarm criteria are indicated to a user, the user can a) dismiss the notification (for example as being a false notification or a notification of something that does not pose any threat), or, b) store the notification. In the latter case, the notification and its position from a navigation system 15, such as a GPS, Fig. 1, may be stored in a database 16 so that no more notifications will be given for that object 11,12 in that position. This information can also be shared by a central or distributed system in order to be used by other track bound vehicles 2 travelling on the same or adjacent rail track 1.

Alternatively, the database 16 may contain pre-stored information about known objects 11 that will result in notifications. For example the positions of electrically heated railway switches, transformer stations, etc. are known.

Indication of an obstacle to a user may comprise showing the obstacle and its location on a display 17.

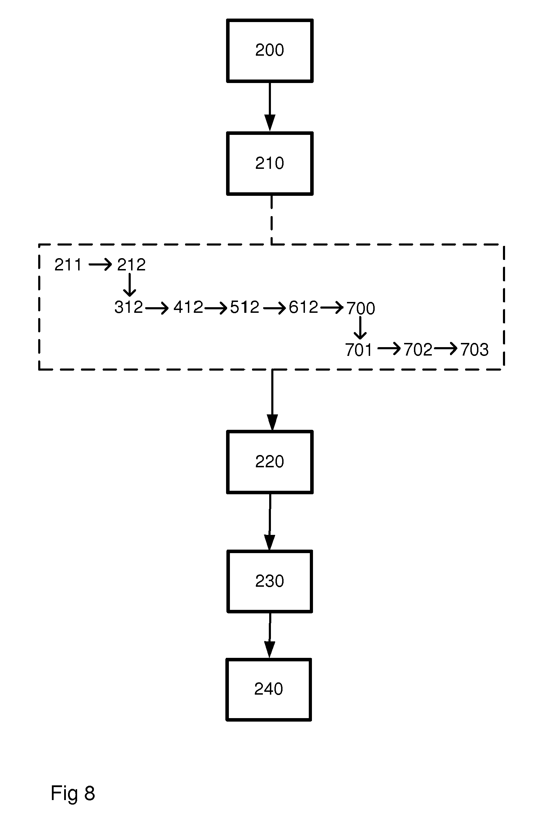

Fig. 8 shows schematically a method of detecting an anomaly 11, 12 on or near an area 8, 9 which moves along a movement direction relative to a camera 3. That the area 8, 9 moves relative the camera 3 is here meant that the camera 3 is not moving while the area 8, 9 is moving, that the area 8, 9 is not moving while the camera 3 is moving or that both the area 8, 9 and the camera 3 are moving in the same direction or in opposite directions.

An area 8, 9 which is not moving while the camera 3 is moving is illustrated in Fig. 1.

The camera 3 may for example be an ultraviolet, visual, infrared or multispectral camera and the image may for example be a thermal image 5 or a visual image.

The camera 3 may for example be mounted on a vehicle such as a car or a track-bound vehicle 2, Fig. 1, such as a train, a tram, an underground train or a rail bus. The area 8, 9 is then a road or a rail track area.

The camera 3 may be mounted on a wall or similar, preferably by means of an arm, a rack or similar arrangement, and the moving area 8, 9 is then for example a conveyor.

The area 8, 9 may, as seen from the camera 3, be continuous such as a rail track or have a recurring shape along the movement direction, such as a road with non-continuous road-markings or a conveyor with undulated edge.

With "anomaly" is here meant not "area like", such as an obstacle (animal, human, vehicle etc) on or near the rail track, the road or the conveyor.

The movement direction may be predetermined relative to the camera 3, e.g. the camera 3 moves along a path constituting the area 8, 9.

An image depicting the area 8, 9 may be acquired 200 by means of the camera 3.

A part of the image 5 which is occupied by the area 8, 9 may be identified 210 by providing 211 at least one scene geometry based on information concerning the camera 3 and/or based on information concerning the area 8, 9, wherein the scene geometry comprises at least one possible position and extent of the area 8, 9. Thereafter the image 5 may be matched 212 with the scene geometry to determine where in the image 5 the area 8, 9 is positioned.

The step of matching 212 the image 5 with the scene geometry may comprise providing 312, based on the scene geometry, at least two possible locations of the area 8, 9 in the image 5. Each of the possible area 8, 9 locations may then be evaluated 412 by extracting image feature values along the possible area 8, 9, giving each possible area 8, 9 location a score 512 based on the image feature values. Thereafter, the possible area 8, 9 location with the highest score may be selected 612 as the location of the area 8, 9 in the image 5.

The method may further comprise a step of remapping 700 at least the part of the image 5 identified to be occupied by the area 8, 9 in such a way that the movement direction of the area 8, 9 follows one of the axes of the remapped image 5'.

The remapping step 700 may further comprise a refinement step 701, wherein pixel rows 18 or groups of pixel rows in the image 5 are compared 702 with the remapped image 5' for finding an optimal position of each pixel row 18 or group of pixel rows as seen in a direction orthogonal to the movement direction of the area 8, 9.

After the a part of the image 5 occupied by the area 8, 9 has been identified, pixel rows 18 or groups of pixel rows may be extracted 220, which pixel rows 18 or groups of pixel rows extend perpendicular to the movement direction and are positioned at different locations along the movement direction, and which depict respective parts of the area 8, 9. The pixel rows 18 or groups of pixel rows may then be compared 230 with at least one other of the pixel rows 18 or groups of pixel rows and an anomaly 11, 12 may be identified 240 when a difference between such compared pixel rows 18 or groups of pixel rows meet a predetermined criterion.

The predetermined criterion may be a threshold value, wherein the filter response exceeds or fall below the threshold value

The identified anomaly 11, 12 may be projected back 703 to the image 5 using the scene geometry, whereby the anomaly 11, 12 is indicated in its correct position in the image 5.

The anomaly 11, 12 may be indicated in the image 5 by means of a marker, such as a box, a ring, an arrow, a highlight etc (not shown).

Example

Below follows an example of a method of detecting (and tracking) a railway in a thermal video recorded from a train and a method of detecting possible obstacles on the railway.

*Data Collection*

In order to collect relevant image data, a thermal camera and a mirror are mounted into a custom camera house, which is mounted on a train. (The purpose of the arrangement with the mirror being to lower the risk of the (expensive) thermal camera to break due to collision with small objects.) The used camera is a FLIR SC655 acquiring images in the long-wave (thermal) infrared band, i.e., in the wavelengths 8-12 $\mu$m. The camera has a resolution of 640 x 480 pixels and acquires 50 frames per second. Two different optics are used, with horizontal fields of view of 7 and 25 degrees respectively. The 7 degree optics give a good resolution at large distances (at least one kilometer), however, when the railway is curved, it often is outside the field of view. The 25 degree optics almost always keeps the railway within the field of view, but the detection distance is much lower. The prioritization will in the end be made by the customer, and might be different for different trains. In the following, images acquired using the 25 degree optics are shown.

A recording computer is installed inside the train, with a display visible to the driver. In addition, a forward-looking video camera is placed inside the train as well. Note that the thermal camera cannot normally be placed there, since the glass in the windshield is intransparent to long-wave infrared radiation.

*Proposed Method*

Since the extrinsic and intrinsic parameters of the camera can be assumed to be known, the scene geometry is computed first. This includes the homography from pixel to ground coordinates (relative to the train) and possible rail locations. The geometry is computed once, and used, in each frame, for a rough estimation of the rail location assuming constant curvature, as described below. Next, this estimate is refined using an adaptive correlation filter, which is also used for anomaly detection, that is, finding obstacles on the rails, see below.

In addition, a foreground-background segmentation algorithm will be used for finding moving objects near the rail track area, and detected foreground objects as well as anomalies will be kept track of using a multi-target tracker.

Finally, the output of the detection and tracking will be subject to a filtering, where only detected obstacles fulfilling certain alarm criteria will be reported to the operator.

*Scene geometry and rail detection*

Assuming a flat ground, which is appropriate in a railway setting with limited gradients, there is a one to one mapping from pixels to points in a ground coordinate system fixed to the train, commonly referred to as the inverse perspective mapping (IPM), a homography determined from the known camera parameters.

Further, the train has a fixed position and orientation relative to the track during all normal modes of operation. Assuming a locally constant curvature of the track, the curvature is the only free parameter determining the position of the rails in the image. This is exploited to obtain fast and reliable track detections. These assumptions provide for obtaining the advantages of rail detection in the reprojected ground plane image without the need of explicitly reprojecting each frame, thus avoiding sampling artifacts.

*Rail geometry*

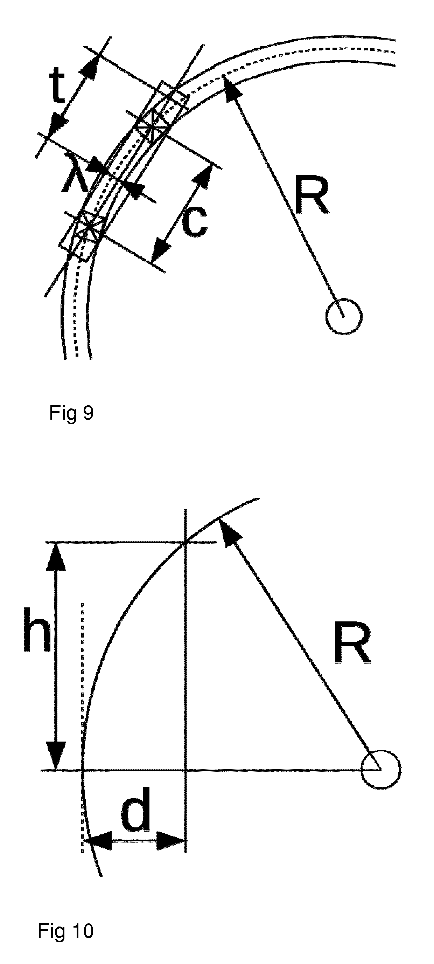

Given the design of a railway car, it is apparent that the rails will be parallel to the car at a point midway between the fore and aft bogies, see Fig. 9. The orthogonal offset, $\lambda$, at this point between the center of the railway and the center of the car is determined by the local curvature, $Q = 1/R$, and the wheel base, $c$, it is given by (the width of a circle segment)

$$\lambda = \frac{1}{Q} - \sqrt{\frac{1}{Q^2} - \frac{c^2}{4}} \approx \frac{Qc^2}{8} \quad , \qquad (1)$$

where the approximation for small curvatures is linear in *Q*. Together with the lenght-wise camera mount offset *t* and camera parameters, this determines the position of the rails in the image for each possible curvature.

The deviation, *d,* of a rail from the tangent line at the car parallel point can be derived from geometric relation and is given by

$$d = h \cot\left(\frac{\pi - \sin^{-1}(hQ)}{2}\right) \qquad (2)$$

with the inverse

$$Q = \frac{1}{R} = \frac{1}{h}\sin\left(\pi - 2\cot^{-1}\frac{d}{h}\right) \quad . \qquad (3)$$

The geometry and parameters are illustrated in Fig. 10.

*Histogram bin maps*

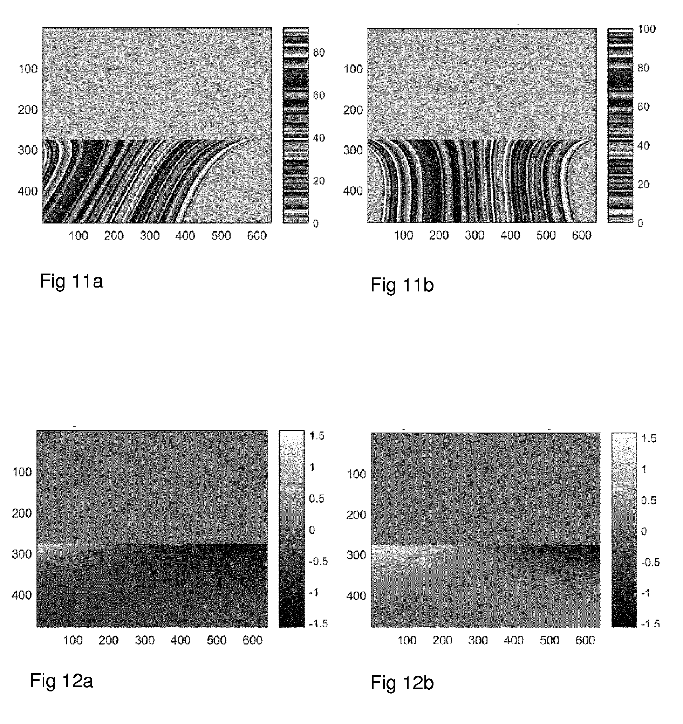

Given (1), (3) and camera parameters, the corresponding curvature of the left and right rail, if passing through a given pixel, can be determined for each pixel below the horizon. Placing bins in the curvature space, map images are generated, mapping each pixel to a curvature bin for the left and right rail respectively. Such maps are shown in Fig. 11 a and 11 b, where a suitable range of curvature is discretized into 100 bins.

Further, the expected orientation of each rail in the image, if passing through a given pixel, can be determined. This is shown in Fig. 12a and 12b, where 0 is vertical and $\pm\pi/2$ is horizontal.

*Curvature estimation*

The curvature histogram bin maps and the expected orientation are calculated in advance for rail close to the camera where the flatness and constant curvature assumptions hold. For detecting rails at large distances from the train, a different approach is used, where lines in the original image are traced, starting from the histogram based detection. The detected lines are projected onto the ground plane using the ground plane homography, whereafter a spline-based curvature rail model is adjusted to the projected detections. By this, the spline rail model can be fitted in the ground plane while only the detected lines are projected, not the full image.

For each frame, Gaussian derivative filters are applied, estimating edge strength and orientation. For each pixel *(x, y)* and rail, the edge strength $A_m(x, y)$ is modulated depending on the difference between the estimated orientation $P_m(x, y)$ and the expected orientation $P_e(x, y)$, Fig. 12, according to

$$A_m(x, y) \exp\left(-\frac{(P_m(x, y) - P_e(x, y))^2}{\sigma_P^2}\right) \quad . \qquad (4)$$

where the parameter $\sigma_P$ determines the orientation error tolerance. The modulated value is added to the curvature bin determined by the bin map, Fig. 11. Assuming limited rail curvature and camera view, the modular nature of the orientation does not require any special attention.

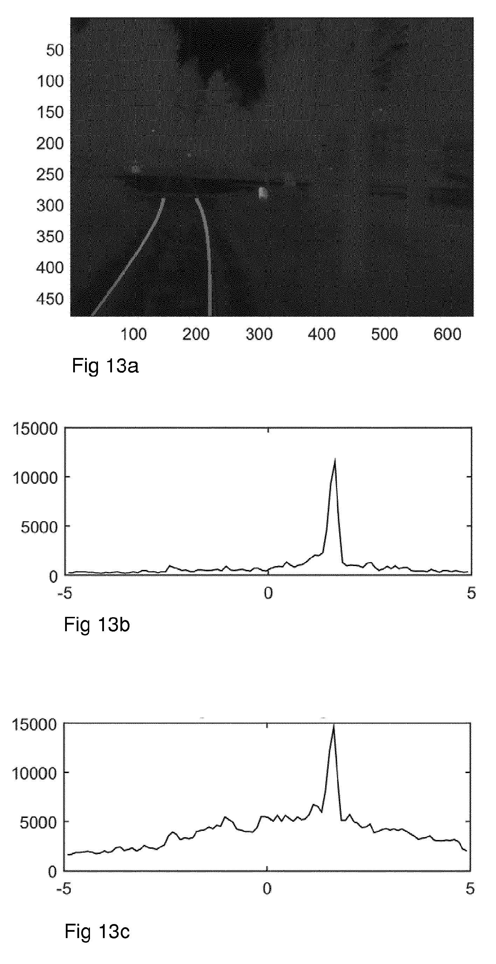

Finally, the peak of the curvature histogram is extracted. The result is illustrated in Fig. 13a-c, where an image is shown with the bin map areas corresponding to the histogram peak overlaid. The histogram is also shown, together with the corresponding histogram obtained without orientation modulation.

*Combined correction and anomaly detection*

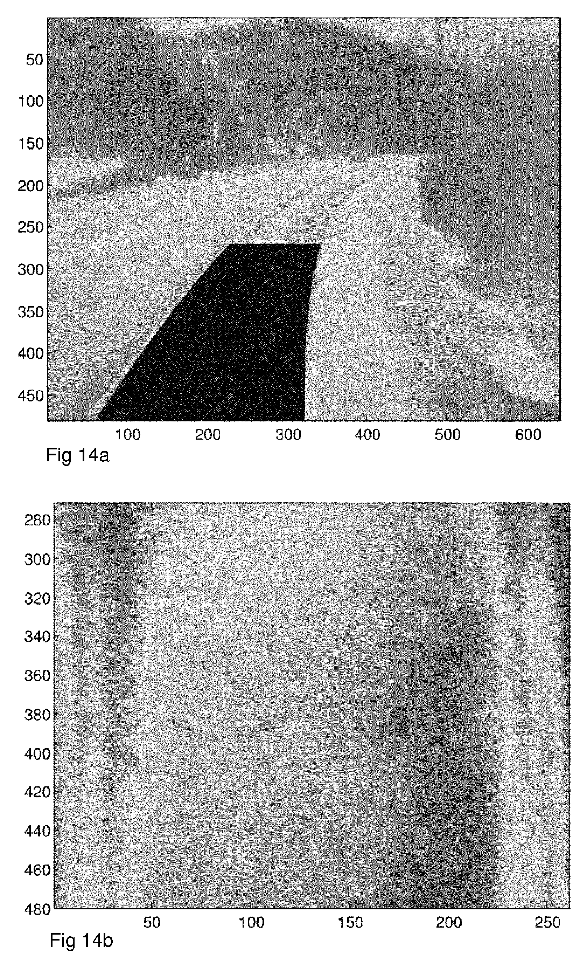

Anomaly detection is performed row-wise using an adaptive correlation filter. The original image as well as the binary mask from the rail detection serves as input to the anomaly detector. In each frame, for each row of the original image, all pixels within the rail mask are rescaled. Rescaling is performed using cubic interpolation and an example of an image with rescaled masked rows can be seen in Fig. 14a and 14b.

The adaptive correlation filter is similar to the one used in the MOSSE tracker described in D. S. Bolme, J. R. Beveridge, B. A. Draper, "Visual object tracking using adaptive correlation filters", Proceedings of the IEEE Conference on Computer Vision and Pattern Recognition, June 2010, pp. 2544-2550. Here the filter is one-dimensional and applied to the masked image pixels row-wise. In addition to anomaly detection, the filter can also be used to correct the rail mask if necessary.

A rail mask which does not follow the rail properly may cause false detections to appear. Therefore, anomaly detection may be performed in three steps, 1) correction of the rail mask, 2) detection of anomalous pixel values, and 3) correlation filter update.

*Rail mask correction*

Rail mask correction is an iterative procedure. The correlation filter is trained to give a Gaussian distribution, $N(w)/2,w/2)$, where w is the filter width, in response when applied to one-row image patches of rails. If the mask does not follow the rail properly, the filter responses will have a similar offset since the filter is trained to give a Gaussian with its mean in the center of the rails.

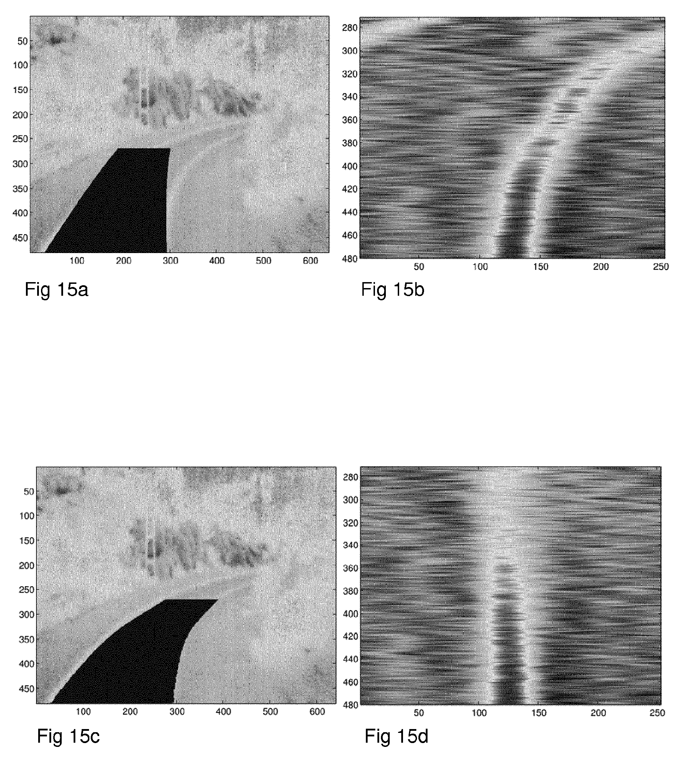

By adjusting the horizontal positions of the rail mask rows based on the filter response information, the rail mask can be corrected. In Fig. 15a-d, an example of an erroneous rail mask and its filter responses before and after correction can be seen.

Correction may be performed bottom-up using the filter responses, starting with the response of the bottom row. In the example, all filter response rows are correlated to the bottom one, one by one, and the displacement with the highest correlation is considered the final displacement for that row. In order to enforce smoothness in the correction displacement, each row is only allowed to have a displacement of $\pm 1$ pixel relative to the previous row. Detections from the previous frame are used during the correction phase in order not to introduce errors in the corrected mask. Rows which had a detection in the previous frame are not corrected and their displacements are set to the one of the previous row without a detection.

A correction like the one described above is performed in each iteration of the correction phase. In each iteration, a new rescaled image and new responses are calculated. If the mean correlation over all rows of the current iteration to the mean response of all previous non-detected rows is lower than the mean correlation of the previous iteration, the iteration is stopped and the correction of the previous iteration is accepted as the final one.

Approximately three iterations are needed to correct the rail mask if it has a moderate offset.

*Detection of anomalous rows*

When the rail mask has been corrected the resulting resized image is analyzed for anomalous rows. In this step, the filter responses from the final, corrected rail mask are used. Given a filter response $y_{t,j}$ at time $t$ and row $j$, a correlation coefficient $c_{t,j}$ is calculated between $y_{t,j}$ and the median of $y_{t,j}, j \in S$. $S$ is the set of rows that did not have a detection in the previous frame. The median is used in order to reduce the influence of outliers.
The $\ell^1$-norm $b_{t,j} = |c_{t,j} - m_{t-1,j}|$ is then thresholded to find detections.

$$d_{t,j} = \begin{cases} 0 & b_{t,j} < \gamma \\ 1 & b_{t,j} \geq \gamma \end{cases} \qquad (5)$$

where $d_{t,j}$ indicates whether the row is anomalous or not and $\gamma \in [0,1]$ is a constant. $m_{t-1,j}$ is the weighted mean of all previous correlation coefficients of row $j$. It is updated as

$$m_{t,j} = \eta c_{t,j} + (1 - \eta)m_{t-1,j}. \; \eta \in [0, 1]$$

is an update factor.

Instead of using the median filter response, the filter responses could be correlated to the Gaussian used for training. However, due to contrast variations and other distortions a normalization is needed. Normalization can be executed in a number of different ways. Using the median response vector has proven to be a suitable method for this application.

*Correlation filter update*

Filter operations may be performed in the Fourier domain using the Fast Fourier Transform described in Press, W., Flannery, B., Teukolsky, S., Vetterling, W.: Numerical recipes. In: C. Cambridge Univ. Press, (1988) in order to reduce computation time. The correlation filter is trained as

$$H = \frac{\sum_{j \in S} \overline{G} F_j}{\sum_{j \in S} \overline{F_j} F_j} \qquad (6)$$

where S is the set of image rows of the rescaled image that are to be used for training. $F_j$ is a Fourier transformed pixel row and G is the Fourier transform of the ideal filter response. In this case the ideal filter response is a Gaussian with its peak centered between the two rails. The bar denotes complex conjugation and the product $\overline{F_j} F_j$ is point-wise. The derivation of equation (6) is given in Bolme, David, S., Beveridge, J., Ross, Draper, Bruce, A,. and Lui, Yui, Man: Visual object tracking using adaptive correlation filters. In: CVPR, (2010). The filter response $y_{t,j}$ at time *t* and row *j* of image row *z,* is found as $y_{t,j} = F^{-1}\{\overline{H_t}Z\}$.

In each new frame, the filter is adaptively updated using a weighted average as

$$H_t = \alpha \left( \frac{\sum_{j \in S_t} \overline{G} F_j}{\sum_{j \in S_t} \overline{F_j} F_j} \right) + (1 - \alpha) H_{t-1} \qquad (7)$$

where $S_t$ is the set of rows at time *t* that have qualified for filter update and $\alpha \in [0, 1]$ is the update factor. The rows used for filter update may be randomly chosen among the rows that did not have a detection.

*Experimental results*

The test sequence that was used to evaluate the performance of the system consists of 386 frames. When the sequence was recorded, the train was driving at about 200 km/h on a rail which slightly bends to the right.

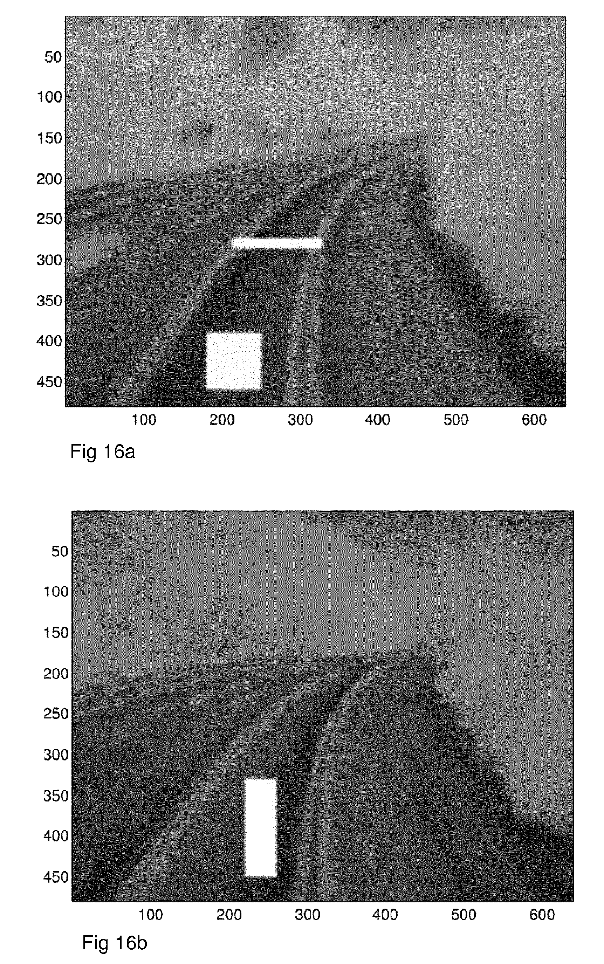

Three simulated objects are introduced on the rail during the sequence. Objects are assumed not to suddenly appear and to increase in size as they are approaching the train. The first object is a square and the second object is a rectangle simulating a pipe lying over the rails. The third object is an upright rectangle supposed to simulate a standing object, human or animal. The temperature of the objects are set to $T_b + \Delta T$ where $T_b$ is the surrounding background temperature and $\Delta T$ is a temperature difference. Furthermore, the edges of the objects are smoothed. Two example frames from the test sequence where the simulated objects are present can be seen in Fig. 16a and 16b.

100 rows were used to train the adaptive correlation filter in each frame, the update factor of the filter, $\alpha$, was set to 0.025 and the update factor of the correlation coefficients, $\eta$, was set to 0.1.

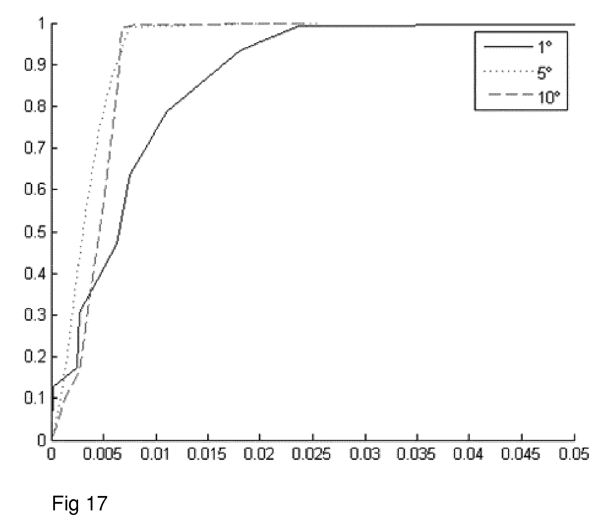

Detection and performance evaluation is performed row-wise. Two parameters were varied during the evaluation, the detection threshold $\gamma$ and the temperature difference $\Delta T$. A plot containing ROC-curves for $\Delta T$ = 1, 5, and 10°C can be found in Fig. 17.

**Claims**

**1.** A method of detecting a rail track (1) in front of a track-bound vehicle (2), the method comprising the steps of:

- providing (20) a thermal camera (3) facing substantially forward in the direction of travel (X) of the vehicle (2);
- acquiring (40) at least one thermal image (5) of a scene (4) in front of the vehicle (2) by means of the thermal camera (3);

- providing (50) at least one scene geometry based on information concerning the thermal camera (3) and information concerning the rail track (1), the scene geometry comprising at least one possible position and extent of the rail track (1); and
- matching (60) the thermal image (5) with the scene geometry to determine where in the thermal image (5) the rail track (1) is positioned.

2. The method as claimed in claim 1, wherein providing (50) the scene geometry comprises computing a plurality of possible positions and extents of the rail track (1), and wherein the matching (60) comprises determining which one of the plurality of possible positions and extents provides the best match with the thermal image.

3. The method as claimed in any one of the preceding claims, wherein the information concerning the thermal camera (3) comprises at least one of camera field of view (6), camera position, camera angle, lens distortion and camera resolution.

4. The method as claimed in any one of the preceding claims, wherein the information concerning the rail track (1) comprises at least one of rail track width and rail track separation.

5. The method as claimed in any one of the preceding claims, wherein the step of matching (60) the thermal image (5) with the scene geometry comprises the steps of:

- providing (61), based on the thermal image (5) and the scene geometry, at least two possible rail track (1) locations in the thermal image (5);
- evaluating (62) each possible rail track (1) location by extracting image feature values along the possible rail track (1);
- giving each possible rail track (1) location a score (63) based on the image feature values;
- selecting (64) the possible rail track (1) location with the highest score as the location of the rail track (1) in the thermal image (5).

6. The method as claimed in any one of the preceding claims, further comprising a step of:

- indicating (65) a rail track area (8) in the thermal image (5), in which rail track area (8) the rail track (1) is located.

7. The method as claimed in claim 6, further comprising a step of refinement (66), the step comprising:

- identifying (67) a pair of continuous parallel features associated with the rail track (1) in the rail track area (8) in the thermal image (5);
- remapping (68) at least a part of the thermal image (5, 5') containing the identified rail track (1), such that both of the parallel features extend in parallel with an image axis;
- filtering (69) pixel rows or groups of pixel rows of the remapped thermal image (5') with a filter in which a horizontal position with a largest filter response indicates a horizontal position of the rail(s) (1a, 1b) in each pixel row or group of pixel rows;
- adjusting (70) the rail track area (8');
- repeating the steps of remapping (68), filtering (69) and adjusting (70) the rail track area (8') a pre-set number of times or until convergence is reached;
- providing (71) a final remapped thermal image (5") with a final rail track area (8").

8. The method as claimed in claim 7, further comprising a step of

- updating (72) the filter to a tuned filter, which is tuned to the rails (1a, 1b) in the final remapped thermal image 5".

9. The method as claimed in claim 8, further comprising a step of detecting (80) an obstacle (11) in the rail track area (8") of the final remapped thermal image (5"), comprising:

- filtering (81) pixel rows (18) or groups of pixel rows indicated by the final rail track area (8") in the final remapped thermal image (5") with the tuned filter, which pixel rows extend along the rail track area (8") and depict respective parts in the rail track area (8"), wherein if a pixel row or groups of pixel rows give filter responses which meet a predetermined criterion, these rows are identified as comprising an obstacle (11) in the final rail track area (8") of the final remapped thermal image (5").

**10.** The method as claimed in claim 9, further comprising a step of

- updating (82) the filter and excluding rows of filtered pixels identified with an obstacle (11).

**11.** The method as claimed in any one of claims 6-10, further comprising a segmentation operation (65'), wherein a thermal image (5, 5') is divided into a first area (8, 8', 8", 9) comprising the rail track area (8, 8', 8") and a close area (9), which close area (9) is adjacent to the rail track area (8, 8', 8"), and a second area (10) which is spaced from the rail track area (8, 8', 8").

**12.** The method as claimed in claim 11, further comprising a step of detecting (90) potential obstacles (12) moving towards the detected rail tracks (1) using the thermal image (5, 5') and the close area (9).

**13.** The method as claimed in claim 12, wherein the detection (90) of potential obstacles (12) moving towards the detected rail tracks (1) comprises identifying areas within the close area (9) which are within a predetermined temperature range and/or have a predetermined shape as a potential obstacle (12).

**14.** The method as claimed in any one of claims 9 to 13, further comprising a step of tracking (100) a detected obstacle (11) on the detected rail tracks (1 ) or a detected potential obstacle (12) moving towards the rail tracks (1) over a plurality of successive thermal images (5, 5").

**15.** A system for detecting a rail track (1) in front of a track-bound vehicle (2), the system comprising:

- a thermal camera (3) arranged facing substantially forward in a direction of travel of the vehicle (2) and arranged to provide thermal image(s) (5) of a scene (4) in front of the vehicle (2);
- a processing device (7) arranged to:

- provide at least one scene geometry based on information concerning the thermal camera (3) and information concerning the rail track (1), the scene geometry comprising at least one possible position and extent of the rail track (1); and
- match a thermal image (5) with the scene geometry to determine where in the thermal image (5) the rail track (1) is positioned.

Fig 1

Fig 2

Fig 3a

Fig 3b

Fig 4

Fig 5a

Fig 5b

Fig 6

Fig 7

Fig 8

Fig 9

Fig 10

Fig 11a

Fig 11b

Fig 12a

Fig 12b

EP 3 048 559 A1

Fig 13a

Fig 13b

Fig 13c

24

Fig 14a

Fig 14b

Fig 15a

Fig 15b

Fig 15c

Fig 15d

Fig 16a

Fig 16b

Fig 17

Europäisches
Patentamt

European
Patent Office

Office européen
des brevets

## EUROPEAN SEARCH REPORT

Application Number

EP 15 15 1999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hiroshi Yamashita ET AL: "Development of Railway Obstacle Detection System", Mitsubishi Heavy Industries Ltd., Technical Review Vol. 33 No. 1, 1 January 1996 (1996-01-01), XP055200899, Retrieved from the Internet: URL:http://www.mhi-global.com/company/technology/review/pdf/e331/e331016.pdf [retrieved on 2015-07-08] * abstract * * page 16, section 1, last paragraph * * page 16, section 2.1, first two sentences; figure 1 * * page 16, section 2.2.1, lines 8-10 * * page 17, left-hand column, last line - right-hand column, line 4 * * page 18, left-hand column, line 1 - page 19, left-hand column, line 18; figure 5 * * page 19, right-hand column, lines 11-14 * * page 19, section 3.2 * ----- | 1,3,4,6, 11-15 | INV. G06K9/00 B61L23/00 B61L23/04 |
| X | WO 97/31810 A1 (ISRAEL AIRCRAFT IND LTD [IL]; THINKWARE LTD [IL]; PEER ARIK [IL]; SVER) 4 September 1997 (1997-09-04) * abstract * * page 3, lines 29-32 * * page 6, lines 1-6 * * page 8, line 21 - page 9, line 10 * * page 9, lines 25-31; figure 3 * ----- -/-- | 1,2,5,6, 15 | TECHNICAL FIELDS SEARCHED (IPC) G06K B61L |

The present search report has been drawn up for all claims

| Place of search | Date of completion of the search | Examiner |
|---|---|---|
| The Hague | 9 July 2015 | Sagrebin-Mitzel, M |

EPO FORM 1503 03.82 (P04C01)

Europäisches Patentamt
European Patent Office
Office européen des brevets

# EUROPEAN SEARCH REPORT

Application Number

EP 15 15 1999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Frederic Maire: "QUT Digital Repository: Vision Based Anti-collision System for Rail Track Maintenance Vehicles", Proceedings IEEE Conference on Advanced Video and Signal Based Surveillance, 1 January 2007 (2007-01-01), pages 170-175, XP055201036, Retrieved from the Internet: URL:http://eprints.qut.edu.au/archive/00012540/01/12540.pdf [retrieved on 2015-07-08] | 1,2,15 | |
| A | * abstract * <br> * page 1, right-hand column, lines 9-11 * <br> * pages 2 - 4; sections 2 and 2.2 and 2.3 * | 3-14 | |
| A | RUDER M ET AL: "An obstacle detection system for automated trains", PROC. IEEE INTELLIGENT VEHICLE SYMPOSIUM, 2003,, 9 June 2003 (2003-06-09), pages 180-185, XP010645871, DOI: 10.1109/IVS.2003.1212905 ISBN: 978-0-7803-7848-3 * abstract * <br> * page 180, section 1, second paragraph * <br> * page 181, left-hand column, first paragraph * <br> * page 181, section 3.1 and 3.2 * <br> * page 184, section 4 * | 1-15 | |
| A | & RISACK R ET AL: "Robust lane recognition embedded in a real time driver assistance system", PROCEEDINGS OF THE INTELLIGENT VEHICLES SYMPOSIUM, XX, XX, 1 January 1998 (1998-01-01), pages 35-40, XP002293177, * pages 36 -38, sections II and III * | 1,2,5,7, 15 | |

TECHNICAL FIELDS SEARCHED (IPC)

The present search report has been drawn up for all claims

| Place of search | Date of completion of the search | Examiner |
|---|---|---|
| The Hague | 9 July 2015 | Sagrebin-Mitzel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 15 1999

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2015

| Patent document cited in search report | | Publication date | Patent family member(s) | | Publication date |
|---|---|---|---|---|---|
| WO 9731810 | A1 | 04-09-1997 | AU | 1809597 A | 16-09-1997 |
| | | | CA | 2247529 A1 | 04-09-1997 |
| | | | CN | 1214656 A | 21-04-1999 |
| | | | CZ | 9802716 A3 | 13-01-1999 |
| | | | DE | 69714711 D1 | 19-09-2002 |
| | | | DE | 69731009 D1 | 04-11-2004 |
| | | | DE | 69731009 T2 | 17-11-2005 |
| | | | EP | 0883541 A1 | 16-12-1998 |
| | | | EP | 1157913 A2 | 28-11-2001 |
| | | | IL | 117279 A | 31-01-2000 |
| | | | JP | 3342017 B2 | 05-11-2002 |
| | | | JP | 2000505397 A | 09-05-2000 |
| | | | US | 6163755 A | 19-12-2000 |
| | | | WO | 9731810 A1 | 04-09-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140218482 A1

**Non-patent literature cited in the description**

- **D. S. BOLME ; J. R. BEVERIDGE ; B. A. DRAPER.** Visual object tracking using adaptive correlation filters. *Proceedings of the IEEE Conference on Computer Vision and Pattern Recognition,* June 2010, 2544-2550
- **C. STAUFFER ; W. E. L. GRIMSON.** Adaptive background mixture models for real-time tracking. *IEEE International Conference on Computer Vision and Pattern Recognition, Fort Collins, CO,* June 1999
- **B. K. HORN ; B. G. SCHUNK.** Determining Optical Flow. *Proceedings of SPIE,* 1981, vol. 0281
- **S. BLACKMAN ; R. POPOLI.** Design and Analysis of Modern Tracking Systems. Artech House, 1999
- **PRESS, W. ; FLANNERY, B. ; TEUKOLSKY, S. ; VETTERLING, W.** Numerical recipes. C. Cambridge Univ. Press, 1988
- **BOLME, DAVID, S. ; BEVERIDGE, J. ; ROSS, DRAPER, BRUCE, A,. ; LUI, YUI, MAN.** Visual object tracking using adaptive correlation filters. *CVPR,* 2010